# EUROPÄISCHE PATENTANMELDUNG

(11) **EP 3 289 863 A1**
(43) Veröffentlichungstag der Anmeldung: **07.03.2018**
(21) Anmeldenummer: 17186789.8
(22) Anmeldetag: 18.08.2017
(51) Int. Cl.: A01K 39/01, A01K 39/012

(54) **BESCHÄFTIGUNGSVORRICHTUNG FÜR DEN EINSATZ IN EINER GEFLÜGELTIERHALTUNG UND/ODER -AUFZUCHT UND VERFAHREN ZUR AUFZUCHT UND/ODER ZUM HALTEN VON GEFLÜGELTIEREN**

(30) Priorität: 06.09.2016 DE 202016104912 U
(71) Anmelder: Big Dutchman International GmbH, 49377 Vechta (DE)
(72) Erfinder: BRUNNBERG, Holger, 49078 Osnabrück (DE)
(74) Vertreter: Eisenführ Speiser

(57) **Zusammenfassung**

Die Erfindung betrifft eine Beschäftigungsvorrichtung (10) für den Einsatz in einer Geflügeltierhaltung und/oder -aufzucht, ein Beschäftigungssystem (1, 1'), einen Tierstall (3'), insbesondere zur Aufzucht und/oder zum Halten von Geflügeltieren, und ein Verfahren zur Aufzucht und/oder zum Halten von Geflügeltieren. Insbesondere betrifft die Erfindung eine Beschäftigungsvorrichtung (10) für den Einsatz in einer Geflügeltierhaltung und/oder -aufzucht, umfassend einen Materialbehälter (110) mit mindestens einem Materialeinlass, und mindestens einer Picköffnung (113, 114), eine Pickschale (120) zur Aufnahme von Pickmaterial mit mindestens einem Abriebabschnitt (122), der eine abriebfördernde Oberfläche aufweist, wobei der Materialbehälter angeordnet und ausgebildet ist, ein Pickmaterial von dem Materialeinlass zu der Picköffnung zu führen, und wobei die Picköffnung derart angeordnet und ausgebildet ist, dass im Materialbehälter befindliches Pickmaterial an einem schwerkraftbedingten Austritt aus der Picköffnung gehindert ist.

## Beschreibung

Die Erfindung betrifft eine Beschäftigungsvorrichtung für den Einsatz in einer Geflügeltierhaltung und/oder -aufzucht, ein Beschäftigungssystem, einen Tierstall, insbesondere zur Aufzucht und/oder zum Halten von Geflügeltieren, und ein Verfahren zur Aufzucht und/oder zum Halten von Geflügeltieren.

In der Geflügeltierhaltung, beispielsweise von Hühnervögeln und insbesondere von Legehennen, gibt es das Phänomen des Federpickens und des Kannibalismus. Insbesondere in Geflügeltierherden, deren Schnäbel nicht oder nicht ausreichend gestutzt bzw. kupiert werden, kann bzw. können das Federpicken und/oder der Kannibalismus negative Folgen für die Geflügeltieraufzucht und/oder -haltung haben. Die Ursachen für das Federpicken und/oder für den Kannibalismus sind multifaktoriell, wobei insbesondere Stress, mangelnde Beschäftigungsmöglichkeiten, ungünstige Bedingungen hinsichtlich Stallklima, Futter und Wasser oder Lichtmanagement, zu hohe Besatzdichten und/oder generell ungünstige Haltungsbedingungen als besondere Ursachen erkannt wurden. Das Federpicken resultiert ferner in Tierleid, welches bis hin zum Tod führen kann.

Eine Möglichkeit, um diesem Fehlverhalten der Geflügeltiere und das Tierwohl zu steigern entgegenzuwirken, ist es, den Geflügeltieren Beschäftigungsmaterial bzw. Beschäftigungsmöglichkeiten zur Verfügung zu stellen. Eine derartige Beschäftigung soll in der Regel das Futtersuchverhalten der Geflügeltiere stimulieren, Neugierde bei den Geflügeltieren wecken, gegebenenfalls die spitzen Schnäbel der Geflügeltiere abreiben und nach Möglichkeit nicht oder lediglich in geringem Maße das Standardfutter verdrängen. Zurzeit werden in Boden-, Freiland- oder Biostellen diese Beschäftigungsmöglichkeiten in der Regel im Einstreugang platziert, sodass die Geflügeltiere nur Zugang dazu haben, wenn sie sich außerhalb einer Volierenanlage befinden.

Als Beschäftigungsmöglichkeiten bzw. Beschäftigungsmaterial werden derzeit insbesondere Pickblöcke, Raufen und/oder Kunststoffelemente eingesetzt. Pickblöcke können aus verschiedenen Materialien, wie beispielsweise aus Kalksandstein oder speziell für die Bereitstellung in Geflügeltierhaltung entwickelte Mineralmischungen, bestehen oder diese umfassen. Derartige Pickblöcke werden in der Regel in dem Einstreubereich eines Tierstalls angeordnet, wobei diese Anordnung in der Regel entweder hängend oder stehend erfolgt. Die Geflügeltiere picken in der Regel gegen einen derartigen Pickblock, wodurch ihnen die Möglichkeit gegeben wird, ihrem natürlichen Pickbedürfnis gerecht zu werden. Durch dieses Picken nutzen die Geflügeltiere ihren Schnabel ab, sodass dieser weniger scharfkantig ist.

Der Nachteil von Pickblöcken in der Geflügeltierhaltung ist die meist schnell abnehmende Attraktivität. Der Pickblock ist ein recht statisches Beschäftigungselement, welches zudem lediglich bedingt auch weitere Geflügeltiere dazu animiert, an diesem zu picken. Darüber hinaus neigen Geflügeltiere dazu, ihre Exkremente auf den Pickblöcken abzusetzen, sodass die Gesundheit der Geflügeltiere durch Pickblöcke gefährdet werden kann. In einer weiteren Variante von Pickblöcken bestehen diese aus Mineralfutter oder umfassen dieses. Ein derartiger Pickblock aus Mineralfutter hat gegenüber den zuvor genannten Pickblöcken den Vorteil, dass dieser von den Geflügeltieren auch als Futter angesehen werden kann. Aber auch Pickblöcke aus Mineralfutter zeichnen sich durch eine geringe Animation der Geflügeltiere zum Picken bzw. zur Durchführung von Scharr- und Suchaktivitäten der Geflügeltiere aus.

Raufen sind mit Heu, Stroh oder ähnlichem Material gefüllte Körbe und werden in der Regel in den Einstreugängen aufgestellt oder aufgehängt. Die Raufen sind derart angeordnet und ausgebildet, dass die Geflügeltiere das in der Raufe befindliche Material herauspicken können. Die Raufe hat, wenn sie regelmäßig befüllt wird, eine etwas bessere Attraktivität als ein Pickblock, da die Geflügeltiere regelmäßig neues Beschäftigungsmaterial erreichen können. Dafür hat die Raufe jedoch keinen Effekt auf die Schnabelabnutzung und auch das in der Raufe befindliche Material hat keine Iangfristige Attraktivität für die Geflügeltiere. Alternativ zur Raufe können auch Heu oder Strohballen im Einstreubereich positioniert werden, wobei in Bezug auf die Nachteile die gleichen Nachteile vorhanden sind wie bei konventionellen Raufen.

Kunststoffelemente werden in dem Einstreubereich hängend und/oder stehend verteilt. Kunststoffelemente können beispielsweise als Kanister, Ketten, Bänder oder auch Eimer ausgebildet sein. Kunststoffelemente zeichnen sich jedoch durch eine lediglich kurze Attraktivität für die Geflügeltiere aus.

Die unzureichenden Beschäftigungselemente und die im Vorherigen genannten Nachteile für die Geflügeltiere resultieren in der Regel in einer erhöhten Mortalität und in einer reduzierten Produktivität der überlebenden Geflügeltiere. Beide Effekte resultieren ferner darin, dass die Kosten der Geflügeltierhaltung steigen und das Tierwohl beeinträchtigt wird. Das Kürzen von Geflügeltierschnäbeln ist ferner in vielen Jurisdiktionen lediglich eingeschränkt oder gar nicht möglich.

Es ist daher eine Aufgabe der vorliegenden Erfindung, eine Beschäftigungsvorrichtung für den Einsatz in einer Geflügeltierhaltung und/oder -aufzucht, ein Beschäftigungssystem, einen Tierstall, insbesondere zur Aufzucht und/oder zum Halten von Geflügeltieren, und ein Verfahren zur Aufzucht und/oder zum Halten von Geflügeltieren bereitzustellen, welche ein oder mehrere der genannten Nachteile vermindert oder beseitigt. Insbesondere ist es eine Aufgabe der Erfindung, eine Lösung bereitzustellen, die die Mortalität von Geflügeltieren in einer Geflügeltierhaltung und/oder -aufzucht reduziert oder beseitigt. Ferner ist es eine Aufgabe der vorliegenden Erfindung, eine Lösung bereitzustellen, die eine artgerechtere Haltung und/oder Aufzucht von Geflügeltieren ermöglicht. Darüber hinaus ist es eine Aufgabe der vorliegenden Erfindung, eine Lösung bereitzustellen, die die Produktivität einer Geflügeltierhaltung und/oder-aufzucht erhöht.

Gemäß einem ersten Aspekt der vorliegenden Erfindung wird die eingangs genannte Aufgabe gelöst, durch eine Beschäftigungsvorrichtung für den Einsatz in einer Geflügeltierhaltung und/oder -aufzucht, insbesondere von Hühnervögeln, umfassend einen Materialbehälter mit mindestens einem Materialeinlass, und mindestens einer Picköffnung, eine Pickschale zur Aufnahme von Pickmaterial mit mindestens einem Abriebabschnitt, der eine abriebfördernde Oberfläche aufweist, wobei der Materialbehälter angeordnet und ausgebildet ist, ein Pickmaterial von dem Materialeinlass zu der Picköffnung zu führen, und wobei die Picköffnung derart angeordnet und ausgebildet ist, dass im Materialbehälter befindliches Pickmaterial an einem schwerkraftbedingten Austritt aus der Picköffnung gehindert ist.

Der Erfindung liegt die Erkenntnis zugrunde, dass eine artgerechtere Haltung, ein reduziertes Federpicken und eine reduzierte Mortalität ermöglicht werden können, indem die Funktionen Picken und Schnabelabnutzen zusammen mit einem gesteigerten Futtersuchverhalten und dauerhafter Verfügbarkeit kombiniert werden. Durch eigene Pick-, Erkundungs- und Spielaktivität lösen die Geflügeltiere einzelnes Pickmaterial aus dem Materialbehälter durch Picken in die Picköffnung heraus. Die Picköffnung weist vorzugsweise im Betriebszustand eine vertikale Eintrittsfläche auf. Das herausgelöste Pickmaterial gelangt beispielsweise durch ein Picken in die Picköffnung auf die Pickschale, sodass die Geflügeltiere das Pickmaterial auf der mit einer abriebfördernd beschichteten Oberfläche versehenen Pickschale aufnehmen können. Das Material der abriebfördernden Oberfläche weist vorzugsweise eine Materialhärte auf, die höher ist, als die Materialhärte von Geflügeltierschnäbeln.

Daraus folgt, dass die Futteraufnahme für die Geflügeltiere interessanter und somit auch attraktiver gestaltet ist und sich die Geflügeltiere mit der erfindungsgemäßen Beschäftigungsvorrichtung länger beschäftigen. Dadurch, dass die Geflügeltiere sich selbst für ihr Erkundungsverhalten belohnen, bleibt der Nutzungsreiz dauerhaft bestehen. Mit der abriebfördernden Oberfläche wird der natürliche Abrieb des Geflügeltierschnabels gefördert, der in der Natur in der Regel über langwierige Futtersuchaktivität erzielt wird. Durch die Möglichkeit eine erfindungsgemäße Beschäftigungsvorrichtung in sehr kleinen Baugrößen zur Verfügung zu stellen, kann eine Vielzahl von Beschäftigungsvorrichtungen in einer Volierenanlage angeordnet werden, sodass nicht nur dominante und ranghohe Geflügeltiere Zugang zu der Beschäftigungsvorrichtung haben.

Der Materialbehälter weist vorzugsweise eine Umwandung auf, wobei in dieser Umwandung der mindestens eine Materialeinlass und/oder die mindestens eine Picköffnung angeordnet sein kann bzw. können. Es ist besonders bevorzugt, dass die Picköffnung derart angeordnet und ausgebildet ist, dass ein Geflügeltier, insbesondere ein Hühnervogel, an ein Pickmaterial in einem inneren Hohlraum des Materialbehälters gelangt. Es ist ferner bevorzugt, dass die Picköffnung als Durchgangsöffnung in einer Außenwand des Materialbehälters ausgebildet ist. Durch derartige Durchgangsöffnungen können Geflügeltiere, insbesondere Hühnervögel, mit ihrem Schnabel in den Hohlraum des Materialbehälters zumindest teilweise eindringen und somit das Pickmaterial erreichen.

In einer bevorzugten Fortbildung der Beschäftigungsvorrichtung ist ferner vorgesehen, dass die Außenwand oder ein Abschnitt der Außenwand, insbesondere der die Picköffnung aufweisende Abschnitt der Außenwand, des Materialbehälters im Wesentlichen rohrförmig und/oder im Wesentlichen kugelförmig und/oder kegelförmig ausgebildet ist. Darüber hinaus kann es bevorzugt sein, dass ein Querschnitt des Materialbehälters oder ein Abschnitt des Materialbehälters, insbesondere der die Picköffnung aufweisende Abschnitt des Materialbehälters, orthogonal zu einer Haupterstreckungsrichtung im Wesentlichen rund und/oder oval und/oder drei- und/oder mehreckig ausgebildet ist. Des Weiteren ist es bevorzugt, dass der von der Außenwand ausgebildete Hohlraum des Materialbehälters oder ein Abschnitt des Hohlraums des Materialbehälters, insbesondere der die Picköffnung aufweisende Abschnitt des Materialbehälters, im Wesentlichen zylindrisch und/oder quaderförmig und/oder kugelförmig und/oder kegelförmig ausgebildet ist.

Insbesondere ist es bevorzugt, dass der Materialbehälter eine rohrförmige Geometrie aufweist, der Materialeinlass an dem einen Ende dieses rohrförmigen Materialbehälters angeordnet ist, das diesem Ende gegenüberliegende Ende im Wesentlichen verschlossen ist, und dass die Picköffnung an der radialen Umfangsfläche dieses rohrförmigen Materialbehälters angeordnet ist. In einer bevorzugten Ausführungsvariante der Beschäftigungsvorrichtung ist ferner vorgesehen, dass der Materialbehälter mit der Pickschale verbunden ist, wobei der Materialbehälter vorzugsweise mittig, vorzugsweises koaxial, an der Pickschale angeordnet ist. Die Pickschale kann beispielsweise auch dafür verwendet werden, das der Pickschale zugewandte Ende eines rohrförmig ausgebildeten Materialbehälters abzuschließen. In einer weiteren bevorzugten Ausführungsvariante der Beschäftigungsvorrichtung ist vorgesehen, dass der Materialbehälter zwei oder mehr Materialeinlässe umfasst.

Durch die erfindungsgemäße Ausbildung der Picköffnung, tritt im Wesentlichen kein im Materialbehälter befindliches Pickmaterial aus dem Materialbehälter heraus. Damit in dem Materialbehälter befindliches Pickmaterial aus diesem herausfällt, bedarf es insbesondere einer von außen kommenden Aktivität, welche beispielsweise durch das Picken mit dem Schnabel eines Geflügeltieres erfolgen kann. Das heißt, wenn der Materialbehälter mit einem Pickmaterial aufgefüllt wird oder ist, tritt dieses Pickmaterial im Wesentlichen nicht selbstständig, aus den Picköffnungen wieder heraus. Dies wiederum resultiert im Betrieb der Beschäftigungsvorrichtung darin, dass ein Geflügeltier, insbesondere ein Hühnervogel, mit einem Schnabel in eine Picköffnung zu picken hat, um an Pickmaterial heranzukommen. Das Pickmaterial kann jedoch in der Regel nicht umgehend aus der Picköffnung von dem Geflügeltier aufgenommen werden, sondern dieses fällt hinunter auf die Pickschale. Von dort aus kann ein Geflügeltier das Pickmaterial gezielt anvisieren und aufnehmen. Durch dieses gezielte Anvisieren eines Pickmaterials, welches durch die Ausbildung der Picköffnung lediglich in geringen Mengen auf der Pickschale angeordnet ist, kommt der Schnabel des Geflügeltieres in der Regel mit der abriebfördernden Oberfläche der Pickschale in Kontakt, sodass der Schnabel eines Geflügeltieres hier abgerieben und somit die Scharfkantigkeit vermindert wird. Der schwerkraftbedingte Austritt des Pickmaterials aus der Picköffnung kann beispielsweise durch eine entsprechende Geometrie der Picköffnung realisiert werden. Insbesondere ist es bevorzugt, dass die Picköffnung äußerst geringe Abmessungen aufweist, sodass das Pickmaterial eine größere Größe aufweist als die Picköffnung. Darüber hinaus können auch weitere austrittshemmende Elemente vorgesehen werden, wie beispielsweise Borsten oder elastische Materialien.

Eine weitere bevorzugte Fortbildung der Vorrichtung zeichnet sich dadurch aus, dass der Materialbehälter zwei oder mehr Picköffnungen umfasst. Eine derartige Fortbildung der Beschäftigungsvorrichtung hat insbesondere den Vorteil, dass eine Mehrzahl an Geflügeltieren die Beschäftigungsvorrichtung zeitgleich nutzen kann. Somit wird die Konkurrenz unter den Geflügeltieren weiter reduziert. Die zwei oder mehr angeordneten Picköffnungen am Materialbehälter können jeweils die gleiche Ausbildung in Bezug auf Größe, Geometrie und weitere Charakteristika aufweisen. Alternativ vorzugsweise weisen die zwei oder mehr Picköffnungen unterschiedliche Geometrien, Abmessungen und weitere Charakteristika auf.

Ferner ist vorzugsweise vorgesehen, dass die Picköffnung einen im Wesentlichen schlitzförmigen Querschnitt orthogonal zu einer Durchtrittsrichtung mit einer Haupterstreckungsrichtung und einer orthogonal zu dieser angeordneten Nebenerstreckungsrichtung aufweist, wobei die Nebenerstreckungsrichtung im Betriebszustand vorzugsweise im Wesentlichen horizontal ausgerichtet ist und deren Erstreckung ferner vorzugsweise in Richtung der Pickschale zunimmt. Die Haupterstreckungsrichtung ist dadurch gekennzeichnet, dass diese die größte Abmessung der Erstreckungen aufweist. Die Nebenerstreckungsrichtung ist orthogonal zur Haupterstreckungsrichtung ausgerichtet und bildet somit die zweite Erstreckung des Picköffnungsquerschnitts.

Gemäß dieser Ausführungsvariante erstreckt sich die Nebenerstreckungsrichtung im Betriebszustand vorzugsweise im Wesentlichen horizontal, sodass sich die Haupterstreckungsrichtung im Betriebszustand vorzugsweise im Wesentlichen vertikal erstreckt. Die Picköffnung weist somit ein erstes Ende und ein zweites Ende auf, wobei die Haupterstreckung der Picköffnung sich von dem ersten Ende zu dem zweiten Ende hin erstreckt. Bevorzugt ist es ferner, dass die Nebenerstreckungsrichtung am ersten Ende eine andere Abmessung aufweist, als die Nebenerstreckungsrichtung am zweiten Ende. Insbesondere ist es bevorzugt, dass das erste Ende der Pickschale zugewandt ist und das zweite Ende der Pickschale abgewandt ist, und die Erstreckung in Nebenerstreckungsrichtung am ersten Ende größer ist als die Erstreckung der Nebenerstreckungsrichtung am zweiten Ende. Ferner vorzugsweise kann die Erstreckung in Nebenerstreckungsrichtung des schlitzförmigen Querschnitts der Picköffnung konstant sein. Ferner vorzugsweise weist die Picköffnung am zweiten Ende einen halbkreisförmigen Abschluss auf.

Eine weitere besonders bevorzugte Ausführungsvariante der Beschäftigungsvorrichtung sieht vor, dass sich die Picköffnung bis zu einem der Pickschale zugewandten Ende des Materialbehälters erstreckt. In einer bevorzugten weiteren Ausführungsvariante der Beschäftigungsvorrichtung ist vorgesehen, dass ein der Pickschale zugewandtes Ende des Materialbehälters im Bereich der Picköffnung von der Pickschale beabstandet ist. Zwischen der Pickschale und dem Materialbehälter ist in dieser Ausführungsvariante vorzugsweise eine lichte Höhe ausgebildet. Es ist insbesondere bevorzugt, dass die Beabstandung des Endes des Materialbehälters, insbesondere im Bereich der Picköffnung, von der Pickschale weniger als 20 mm, vorzugsweise weniger als 15 mm, ferner vorzugsweise weniger als 10 mm, insbesondere bevorzugt weniger als 6 mm, ferner bevorzugt weniger oder gleich 4 mm beträgt.

Gemäß einer weiteren besonders bevorzugten Ausführungsvariante der Beschäftigungsvorrichtung ist vorgesehen, dass die Nebenerstreckungsrichtung eine Abmessung von kleiner 8 mm, vorzugsweise kleiner 6 mm, insbesondere bevorzugt kleiner 4 mm, ferner bevorzugt kleiner 2 mm, aufweist, und/oder die Haupterstreckungsrichtung im Betriebszustand vertikal ausgerichtet ist und vorzugsweise eine Abmessung von größer 2 mm, vorzugsweise größer 4 mm, insbesondere bevorzugt größer 6 mm, ferner bevorzugt größer 10 mm, darüber hinaus bevorzugt größer 20 mm, ferner bevorzugt größer 30 mm beträgt.

Eine weitere bevorzugte Fortbildung der Beschäftigungsvorrichtung zeichnet sich dadurch aus, dass die Picköffnung einen im Wesentlichen runden Querschnitt orthogonal zu einer Durchtrittsrichtung aufweist und der im Wesentlichen runde Querschnitt einen Durchmesser von kleiner 8 mm, vorzugsweise kleiner 6 mm, insbesondere bevorzugt kleiner 4 mm, ferner bevorzugt kleiner 2 mm aufweist.

Es ist ferner bevorzugt, dass der Materialeinlass angeordnet und ausgebildet ist, mit einem Fördersystem gekuppelt zu werden, wobei die Kupplung vorzugsweise mittels einer Kupplungseinheit erfolgt, die ferner vorzugsweise an dem Materialbehälter angeordnet ist. Eine derartige Kupplungseinheit kann beispielsweise ausgebildet sein, um die Beschäftigungsvorrichtung mit einer Futterspirale, welche in einem rohrförmigen Fördersystem angeordnet ist, zu verbinden. Alternativ vorzugsweise verbindet die Kupplungseinheit die Beschäftigungsvorrichtung mit einem als Futtertrog ausgebildeten Fördersystem.

Eine weitere besonders bevorzugte Ausführungsvariante der Beschäftigungsvorrichtung sieht vor, dass die Beschäftigungsvorrichtung ein Verteilerelement umfasst, das zumindest abschnittsweise in den Materialbehälter hineinragt und ausgebildet ist, ein Pickmaterial zu der mindestens einen Picköffnung zu leiten, wobei das Verteilerelement vorzugsweise einen kegelförmige Geometrie aufweist und ferner vorzugsweise an der Pickschalte angeordnet ist. Ferner vorzugsweise sind das Verteilerelement, insbesondere das Verteilerelement mit einer kegelförmigen Geometrie, der Materialbehälter und die Pickschale koaxial angeordnet. Ein Verteilerelement hat den besonderen Vorteil, dass das Pickmaterial in dem Materialbehälter nicht abstehen kann, sodass dieses im Wesentlichen frisch für die Geflügeltiere dargeboten wird. Ferner vorzugsweise ist vorgesehen, dass das Verteilerelement, insbesondere ein kegelförmiges Verteilerelement, koaxial innerhalb des Materialbehälters angeordnet ist und derart angeordnet und ausgebildet ist, ein Pickmaterial zu einer Picköffnung zu leiten, die nicht am der Pickschale zugewandten Ende des Materialbehälters angeordnet ist.

Gemäß einer weiteren bevorzugten Ausführungsvariante der Beschäftigungsvorrichtung ist vorgesehen, dass der Abriebabschnitt mindestens ein Trennelement umfasst, das den Abriebabschnitt in zwei oder mehr Teilabriebabschnitte unterteilt. Vorzugsweise ist jedem Teilabriebabschnitt eine Picköffnung zugeteilt. Insbesondere ist es bevorzugt, dass die Anzahl der Picköffnungen und die Anzahl der Teilabriebabschnitte gleich sind. Ferner vorzugsweise sind genau doppelt so viele Picköffnungen angeordnet wie Teilabriebabschnitte. Ferner ist es bevorzugt, dass drei oder mehr Picköffnungen je Teilabriebabschnitt angeordnet sind.

Eine weitere besonders bevorzugte Fortbildung der Beschäftigungsvorrichtung zeichnet sich dadurch aus, dass die abriebfördernde Oberfläche des Abriebabschnitts mindestens ein Abriebmaterial oder eine Kombination von zwei oder mehr Abriebmaterialien aufweist, welches bzw. welche, vorzugsweise ausgewählt ist bzw. sind, aus der Gruppe, bestehend aus Metall, insbesondere Stahl, Keramik, Kunststoff, Korund, Bornitrid, Diamant, und Minerale.

Ferner ist vorzugsweise vorgesehen, dass eine Haupterstreckungsrichtung der Beschäftigungsvorrichtung im Betriebszustand in horizontaler Richtung eine Abmessung von kleiner 200 mm, vorzugsweise von kleiner 150 mm, insbesondere bevorzugt von kleiner 120 mm, ferner bevorzugt von kleiner 100 mm aufweist.

Es ist ferner bevorzugt, dass eine Haupterstreckungsrichtung und/oder ein Durchmesser der Pickschale eine Abmessung von kleiner 200 mm, vorzugsweise von kleiner 150 mm, insbesondere bevorzugt von kleiner 120 mm, ferner bevorzugt von kleiner 100 mm aufweist.

In einer bevorzugten weiteren Ausführungsvariante der Beschäftigungsvorrichtung ist vorgesehen, dass die Pickschale eine tellerförmige Geometrie aufweist mit einem vorzugsweise kreisrunden und/oder ovalen und/oder eckigem Querschnitt. Ferner ist es bevorzugt, dass die Pickschale und/oder der Materialbehälter Metall, und/oder Kunststoff, und/oder Keramik umfasst oder daraus besteht.

Gemäß einem weiteren Aspekt der Erfindung wird die eingangs genannte Aufgabe gelöst durch ein Beschäftigungssystem, umfassend mindestens eine Beschäftigungsvorrichtung nach mindestens einer der im Vorherigen genannten Ausführungsvarianten, und ein Fördersystem zur Förderung von Pickmaterial, wobei die Beschäftigungsvorrichtung mit dem Fördersystem über eine Kupplungseinheit derart gekoppelt ist, dass ein Pickmaterial von dem Fördersystem in den Materialbehälter befördert wird, und wobei vorzugsweise im Betriebszustand die horizontalen Abmessungen der Beschäftigungsvorrichtung kleiner oder gleich der entsprechenden horizontalen Abmessungen des Fördersystems, insbesondere quer zur Förderrichtug, im Bereich der Beschäftigungsvorrichtung sind. Durch die größeren horizontalen Abmessungen des Fördersystems im Vergleich zu den horizontalen Abmessungen der Beschäftigungsvorrichtung überdeckt das Fördersystem die Beschäftigungsvorrichtung in horizontaler Richtung. Durch diese Überdeckung der Beschäftigungsvorrichtung gelangen beispielsweise die Exkremente eines Geflügeltieres, welches sich auf dem Fördersystem befindet, nicht oder in vermindertem Maße in und/oder auf die Beschäftigungsvorrichtung. Darüber hinaus zeichnet sich eine derartige Anordnung mit einer derartig dimensionierten Beschäftigungsvorrichtung dadurch aus, dass diese in einer Volierenanlage keinen großen Platzbedarf erfordert. Insbesondere ist der Platzbedarf nicht größer als für das vorhandene Fördersystem.

Dies hat ferner den Vorteil, dass die Geflügeltiere einen permanenten Zugang zu der Beschäftigungsvorrichtung haben, wobei dies auch für die Anfangsphase der Geflügeltiere gilt, in welcher die Geflügeltiere unter Umständen nicht oder lediglich eingeschränkt die Volierenanlage verlassen können. Darüber hinaus gibt es keine Stoßzeiten an den Beschäftigungsvorrichtungen, da die Beschäftigungsvorrichtung stets verfügbar ist. Dies reduziert weiterhin Konfliktsituationen und Stress für die Geflügeltiere. Darüber hinaus ermöglicht eine derartige Anordnung auch schwachen Geflügeltieren, die unter Umständen nicht regelmäßig oder lediglich eingeschränkt die Anlage verlassen können, eine Zugänglichkeit zur Beschäftigungsvorrichtung. Die Geflügeltiere müssen ferner nicht oder lediglich eingeschränkt um die Beschäftigungsvorrichtung konkurrieren. Durch die zuvor beschriebenen geringen Dimensionen von Beschäftigungsvorrichtungen können eine Vielzahl von Beschäftigungsvorrichtungen in einer Volierenanlage vorgesehen werden, sodass wiederum weniger Stress in der Herde und somit weniger Konflikte stattfinden. Trotz einer Vielzahl angeordneter Beschäftigungsvorrichtungen entsteht durch die mögliche Dimensionierung kein wesentlicher Platzverlust, so dass die zu nutzende Fläche und somit auch die Produktivität der Haltung und/oder Aufzucht nicht oder nur zu einem geringem Maße reduziert werden.

Eine bevorzugte Fortbildung des Beschäftigungssystems zeichnet sich dadurch aus, dass das Beschäftigungssystem mindestens eine Futterschale zur Bereitstellung eines Futters umfasst. Als Pickmaterial für die Beschäftigungsvorrichtung kann beispielsweise auch ein Futter verwendet werden, wobei der große Unterschied zwischen einer Futterschale und der erfindungsgemäßen Beschäftigungsvorrichtung in der Bereitstellung des Pickmaterials bzw. des Futters liegt. Eine Futterschale wird zu gegebener Zeit mit Futter geflutet und die Geflügeltiere können ohne großen Aufwand direkt das Futter der Futterschale entnehmen. Die Beschäftigungsvorrichtung hingegen stellt lediglich in stark eingeschränktem Maße Pickmaterial, beispielsweise in Form von Futter, zur Verfügung. Vielmehr müssen die Geflügeltiere aktiv nach dem Pickmaterial picken, welches sich innerhalb des Materialbehälters befindet, und dieses derart herausgelöste Futter auf der abriebfördernden Oberfläche der Pickschale anschließend aufnehmen.

Eine Kombination von Futterschale und Beschäftigungsvorrichtung in einem Beschäftigungssystem hat den weiteren Vorteil, dass das Fördersystem für beide Vorrichtungen verwendet werden kann.

Es ist insbesondere bevorzugt, dass für eine angeordnete Futterschale mindestens eine Beschäftigungsvorrichtung, und/oder mindestens zwei Beschäftigungsvorrichtungen, und/oder mindestens drei Beschäftigungsvorrichtungen, und/oder mindestens vier Beschäftigungsvorrichtungen, und/oder mindestens fünf Beschäftigungsvorrichtungen, und/oder mindestens 10 Beschäftigungsvorrichtungen, und/oder mindestens 15 Beschäftigungsvorrichtungen, und/oder mindestens 20 Beschäftigungsvorrichtungen angeordnet ist bzw. sind. Darüber hinaus ist es bevorzugt, dass zwischen zwei benachbart angeordneten Futterschalen mindestens eine Beschäftigungsvorrichtung, und/oder mindestens zwei Beschäftigungsvorrichtung, und/oder mindestens drei Beschäftigungsvorrichtungen, und/oder mindestens vier Beschäftigungsvorrichtungen, und/oder mindestens fünf Beschäftigungsvorrichtungen, und/oder mindestens 10 Beschäftigungsvorrichtungen, und/oder mindestens 15 Beschäftigungsvorrichtungen, und/oder mindestens 20 Beschäftigungsvorrichtungen angeordnet ist bzw. sind. Es ist ferner bevorzugt, dass das Fördersystem als Futtertrog und/oder als Futterrohr ausgebildet ist.

Gemäß einem weiteren Aspekt der vorliegenden Erfindung, wird die eingangs genannte Aufgabe gelöst durch einen Tierstall, insbesondere zur Aufzucht und/oder zum Halten von Geflügeltieren, insbesondere von Hühnervögeln, umfassend mindestens eine Volierenanlage, und einen Einstreubereich, wobei innerhalb der Volierenanlage mindestens eine Beschäftigungsvorrichtung nach mindestens einer der im Vorherigen genannten Ausführungsvarianten und/oder ein Beschäftigungssystem gemäß dem im Vorherigen genannten Aspekt angeordnet ist bzw. sind.

Gemäß einem weiteren Aspekt der vorliegenden Erfindung, wird die eingangs genannte Aufgabe gelöst durch ein Verfahren zur Aufzucht und/oder zum Halten von Geflügeltieren, insbesondere von Hühnervögeln, umfassend die Schritte Bereitstellen einer Beschäftigungsvorrichtung nach mindestens einer der im Vorherigen genannten Ausführungsvarianten und/oder eines Beschäftigungssystems nach mindestens einer der im Vorherigen genannten Ausführungsvarianten, Bereitstellen von Pickmaterial und Anordnen des Pickmaterials innerhalb eines Materialbehälters der Beschäftigungsvorrichtung. Das erfindungsgemäße Verfahren und seine möglichen Fortbildungen weisen Merkmale bzw. Verfahrensschritte auf, die sie insbesondere dafür geeignet machen, für eine erfindungsgemäße Beschäftigungsvorrichtung und ihre Fortbildungen verwendet zu werden. Für weitere Vorteile, Ausführungsvarianten und Ausführungsdetails dieser weiteren Aspekte und ihrer möglichen Fortbildungen, wird auch auf die zuvor erfolgte Beschreibung zu den entsprechenden Merkmalen und Fortbildungen der Beschäftigungsvorrichtung verwiesen.

Bevorzugte Ausführungsformen der Erfindung werden beispielhaft anhand der beiliegenden Figuren erläutert. Es zeigen:
- Fig. 1:: eine schematische, zweidimensionale Ansicht einer beispielhaften Ausführungsform eines Beschäftigungssystems;
- Fig. 2:: eine schematische, dreidimensionale Ansicht des Beschäftigungssystems gemäß Fig. 1;
- Fig. 3:: eine schematische, zweidimensionale Ansicht einer weiteren beispielhaften Ausführungsform eines Beschäftigungssystems;
- Fig. 4:: eine schematische, zweidimensionale Ansicht einer beispielhaften Ausführungsform einer Beschäftigungsvorrichtung;
- Fig. 5:: eine schematische, dreidimensionale Detailansicht einer Picköffnung einer Beschäftigungsvorrichtung gemäß dem Beschäftigungssystem nach Fig. 1 und 2;
- Fig. 6:: eine schematische, dreidimensionale Detailansicht einer Beschäftigungsvorrichtung gemäß dem Beschäftigungssystem nach Fig. 1 und 2;
- Fig. 7:: eine schematische, zweidimensionale Ansicht einer im Stand der Technik bekannten Volierenanlage;
- Fig. 8:: eine im Betrieb befindliche Volierenanlage gemäß Fig. 7;
- Fig. 9:: eine schematische, zweidimensionale Ansicht einer Volierenanlage mit einer beispielhaften Ausführungsform eines Beschäftigungssystems;
- Fig. 10:: eine Volierenanlage gemäß Fig. 9 im Betriebszustand;
- Fig. 11:: eine schematische Ansicht eines Tierstalls mit zwei im Stand der Technik bekannten Volierenanlagen;
- Fig. 12:: eine schematische Ansicht einer beispielhaften Ausführungsform eines Tierstalls mit zwei Volierenanlagen, die jeweils eine beispielhafte Ausführungsform eines Beschäftigungssystems aufweisen;
- Fig. 13:: eine schematische Ansicht eines Tierstalls mit einer im Stand der Technik bekannten Beschäftigungsmöglichkeit.

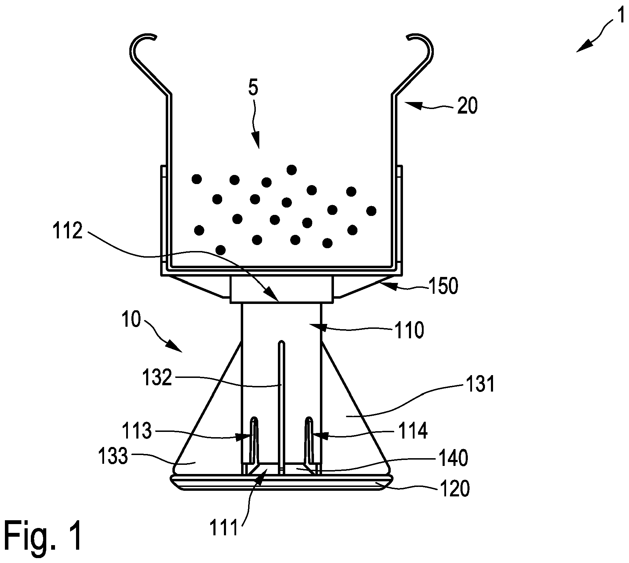

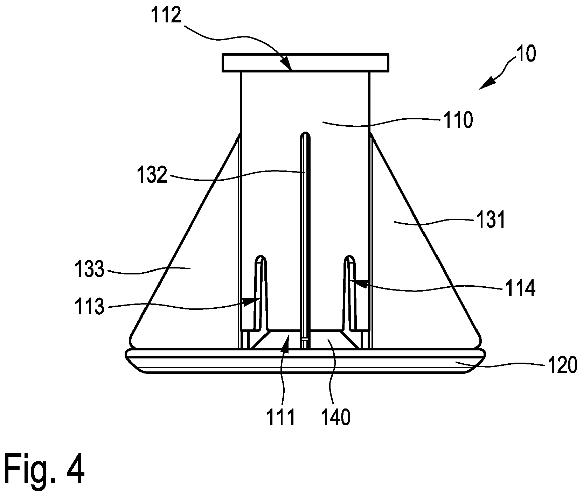

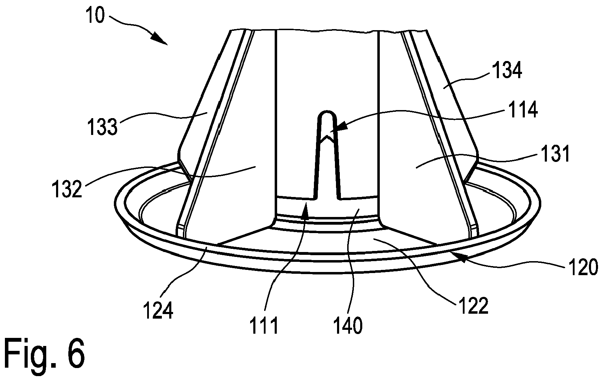

In den Figuren sind gleiche oder im Wesentlichen funktionsgleiche bzw. -ähnliche Elemente mit den gleichen Bezugszeichen bezeichnet. Die in den Figuren 1 bis 3 gezeigten Beschäftigungssysteme 1, 1' weisen jeweils eine im Wesentlichen gleiche Beschäftigungsvorrichtung 10 auf. Die Beschäftigungsvorrichtung 10 weist eine Pickschale 120 auf, die eine flächige Erstreckung aufweist, die hier im gezeigten Betriebszustand horizontal ausgerichtet ist. Der Materialbehälter 110 weist eine rohrförmige Geometrie auf. Der Materialbehälter 110 weist durch diese rohrförmige Geometrie an den Stirnseiten jeweils eine Öffnung auf. Der Materialbehälter 110 erstreckt sich ferner von einem ersten Ende 111 zu einem zweiten Ende 112. Das erste Ende 111 des Materialbehälters 110 ist der Pickschale 120 zugewandt, wobei eine insbesondere in den Figuren 4-6 gezeigte Beabstandung 116 zwischen der Pickschale 120 und dem Materialbehälter 110 vorgesehen ist.

Diese Anordnung ist insbesondere derart gestaltet, dass eine Mittelachse des rohrförmigen Materialbehälters 110 parallel zu einer Flächenorthogonalen der Pickschale 120 ausgerichtet ist. Die Anordnung des Materialbehälters 110 an der Pickschale 120 erfolgt über eine erste Trennwand 131, eine zweite Trennwand 132, eine dritte Trennwand 133 und eine vierte Trennwand 134. Die Trennwände weisen jeweils eine flächige Erstreckung auf, wobei diese flächige Erstreckung die Geometrie eines rechtwinkligen Dreiecks aufweist. Die Trennwände 131-134 sind jeweils mit einer ersten Kathete an der Pickschale und mit der zweiten Kathete an der äußeren Umwandung des Materialbehälters 110 angeordnet. Ferner sind die Trennwände 131-134 äquidistant in Umfangsrichtung des rohrförmigen Materialbehälters 110 voneinander beabstandet. Somit ist der Materialbehälter zwischen den Trennwänden angeordnet und wird von diesen in einer vorbestimmten Beabstandung 116 über der Pickschale 120 gehalten.

Die Beschäftigungsvorrichtung 10 weist ferner insgesamt vier Picköffnungen auf, von denen lediglich zwei Picköffnungen 113, 114 gezeigt sind. Die Picköffnungen 113, 114 weisen ein im Wesentlichen schlitzförmigen Querschnitt orthogonal zu einer Durchtrittsrichtung auf. Der schlitzförmige Querschnitt weist ferner eine Haupterstreckungsrichtung auf und eine orthogonal zu dieser angeordneten Nebenerstreckungsrichtung. Die Haupterstreckungsrichtung, welche hier vertikal ausgerichtet und somit parallel zu einer Längsachse des Materialbehälters 110 angeordnet ist, weist eine Abmessung auf, die die Abmessung der Nebenerstreckungsrichtung um ein Vielfaches übersteigt. Die Picköffnungen 113, 114 weisen ferner eine Haupterstreckung in Haupterstreckungsrichtung zwischen einem ersten Ende, welches der Pickschale zugewandt ist, und einem zweiten Ende, welches dem Fördersystem zugewandt ist, auf. Die Abmessung der Picköffnungen 113, 114 in Nebenerstreckungsrichtung reduziert sich kontinuierlich von dem ersten Ende zu dem zweiten Ende. Das zweite Ende weist zudem eine halbkreisförmige Geometrie auf.

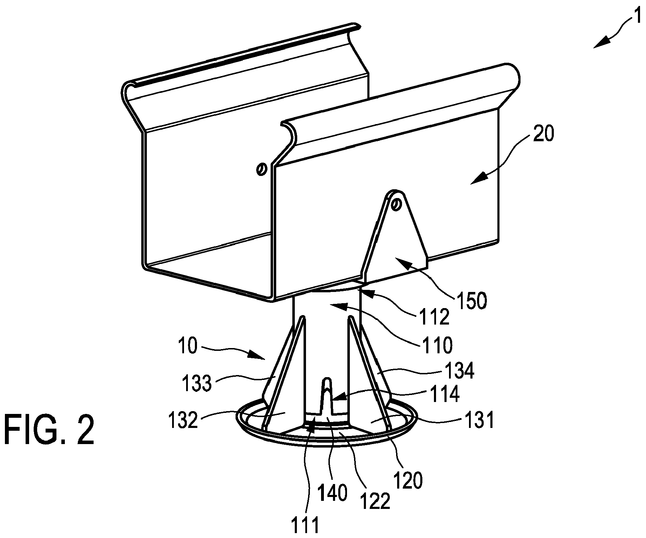

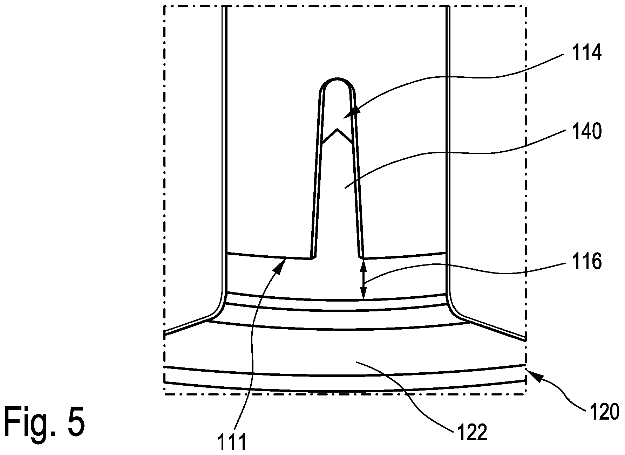

Insbesondere in den Figuren 2 und 5 ist zu erkennen, dass der Durchmesser des Materialbehälters 110 geringer ist als der Durchmesser der Pickschale 120. Der dadurch freibleibende ringförmige Bereich zwischen den äußeren Begrenzungen der Pickschale und dem Materialbehälter 110 weist ein abriebförderndes Material auf, sodass hier ein Abriebabschnitt 122 ausgebildet wird. Durch die Trennwände 131-134 wird dieser Abriebabschnitt 122 ferner in vier Teilabriebabschnitte unterteilt. Ferner weist die tellerförmige Geometrie der Pickschale 120 einen Pickschalenrand 124 auf, der darin resultiert, dass Pickmaterial, welches von der Picköffnung 113, 114 auf die Pickschale 120 fällt, im Wesentlichen in der Schale verbleibt.

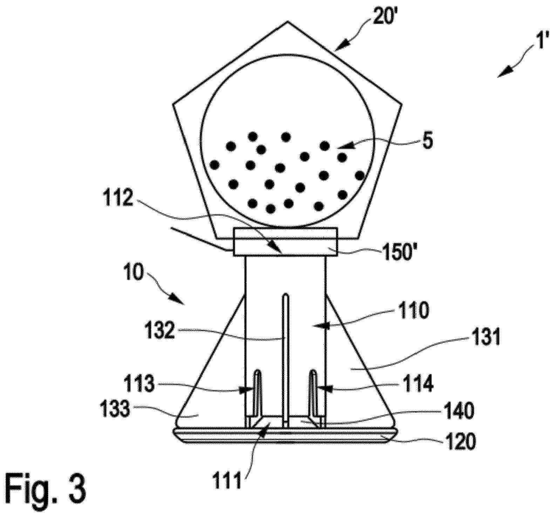

Die Beschäftigungssysteme 1, 1', die in den Figuren 1 und 3 gezeigt sind, unterscheiden sich insbesondere durch die Ausbildung der Fördersysteme 20, 20', welche ausgebildet sind, ein Pickmaterial 5 zu fördern. Die Fördersystem 20, 20' sind jeweils am zweiten Ende des Materialbehälters stirnseitig angeordnet. Das Beschäftigungssystem 1 in Figur 1 ist als Futtertrog ausgebildet, der einen orthogonal zur Förderrichtung rechteckig ausgebildeten Querschnitt aufweist. Das Beschäftigungssystem 1', das in Figur 3 gezeigt ist, weist ein Förderrohr mit einer nicht gezeigten Futterspirale auf, welches orthogonal zur Förderrichtung einen im Wesentlichen kreisrunden Querschnitt aufweist.

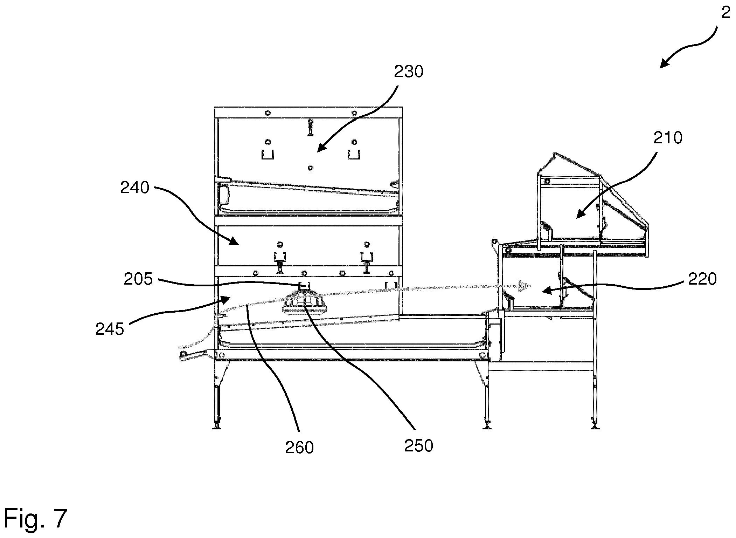

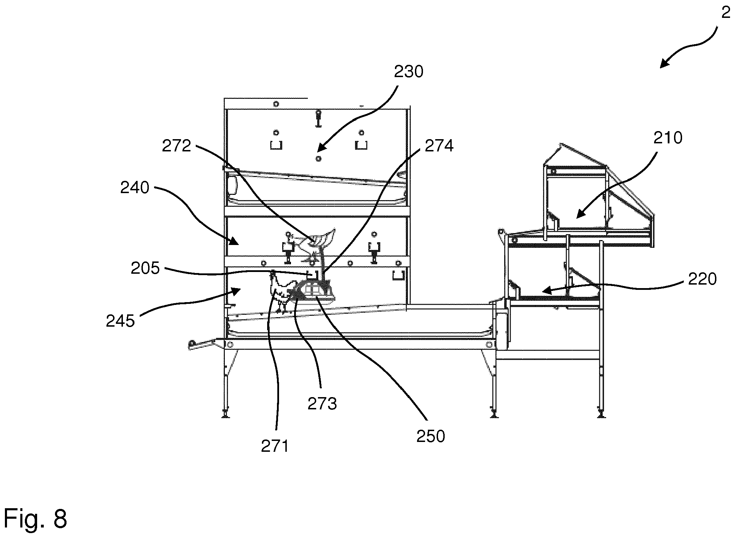

Die in den Figuren 7 und 8 gezeigten im Stand der Technik bereits bekannten Volierenanlagen, weisen ein erstes Nest 210 und ein zweites Nest 220 auf, die insbesondere ausgebildet sind, um Geflügeltieren einen Raum zum Legen von Eiern zu bieten. Darüber hinaus weist die Volierenanlage 2, entfernt von den Nestern 210, 220, einen ersten Aufenthaltsbereich 230 und einen zweiten Aufenthaltsbereich 240 auf. Der erste Aufenthaltsbereich 230 ist vertikal über dem zweiten Aufenthaltsbereich 240 angeordnet, wobei unter dem zweiten Aufenthaltsbereich ein Durchgangsbereich 245 mit einer Futterschale 250 angeordnet ist. Der Durchgangsbereich 250 ist insbesondere angeordnet und ausgebildet, um einem Geflügeltier einen Durchgang zu den Nestern 210, 220 zu ermöglichen. Vorliegend ist in dem Durchgangsbereich 250 eine Futterschale 250 angeordnet. Insbesondere in Figur 8 ist gezeigt, dass die derart angeordnete Futterschale eine Vielzahl an Nachteilen mit sich bringt. Zum einen ist die Futterschale als großes Bauelement im Durchgangsbereich 250 angeordnet und versperrt bzw. verknappt den Geflügeltieren den Durchgang und die Kapazität der Volierenanlage 2 wird durch die Futterschale 250 reduziert. Darüber hinaus zeigt Figur 8, dass Exkremente 273, 274 der Geflügeltiere 271, 272, leicht in die Futterschale 250 gelangen können.

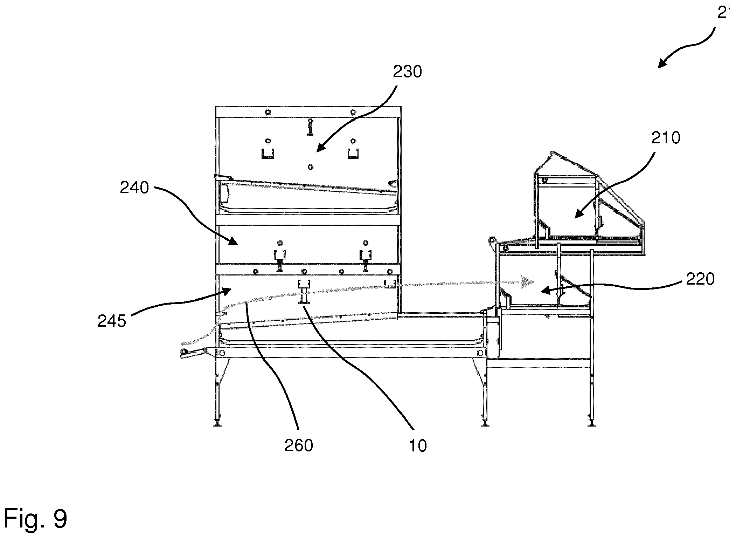

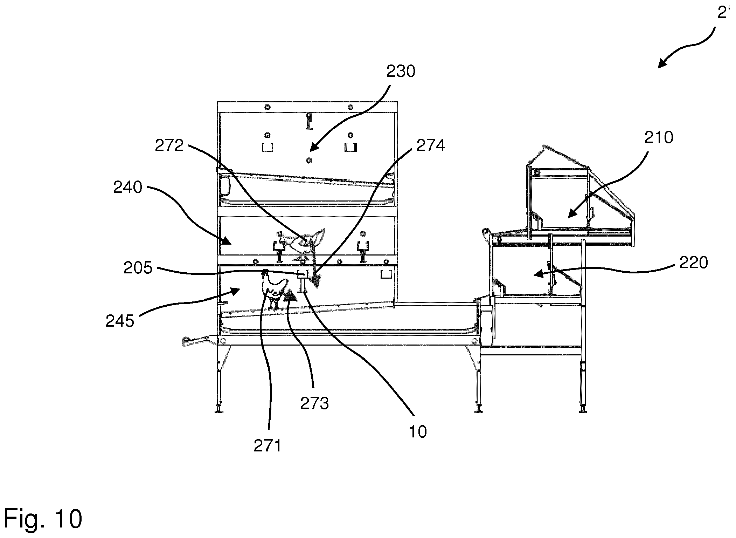

Die in Figuren 9 und 10 gezeigten Volierenanlagen mit erfindungsgemäßen Beschäftigungsvorrichtungen 10 bzw. Beschäftigungssystemen ist zu erkennen, dass die kompakt dimensionierten Beschäftigungsvorrichtungen 10 kein Hindernis für Geflügeltiere im Durchgangsbereich 250 darstellen. Insbesondere in Figur 10 ist ferner zu erkennen, dass durch die kompakte Dimensionierung der Beschäftigungsvorrichtung 10 keine oder lediglich in eingeschränktem Maße Exkremente von Geflügeltieren 271, 272 in die Beschäftigungsvorrichtung 10 gelangen können. Dies erklärt sich unter anderem daher, dass die horizontalen Abmessungen der Beschäftigungsvorrichtung 10 geringer sind als die horizontalen Abmessungen des Fördersystems 205.

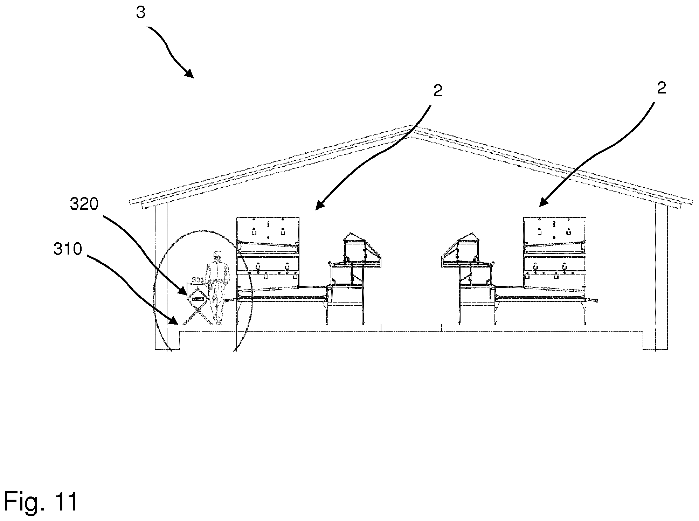

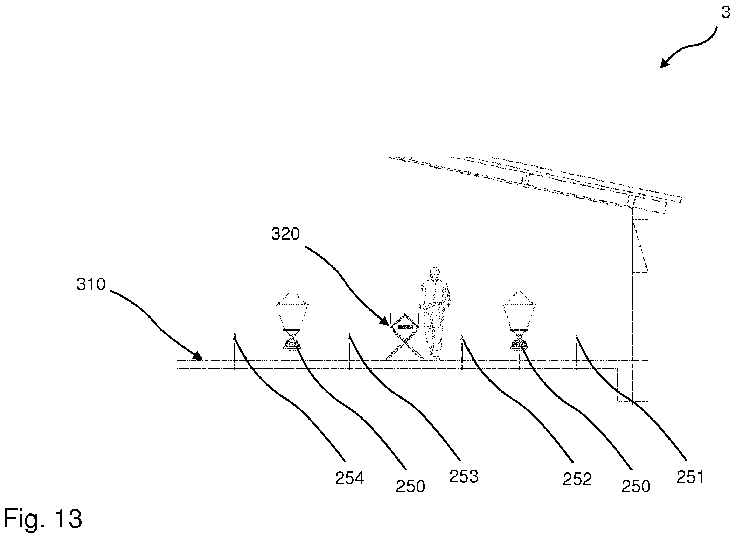

In Figur 11 ist ein Tierstall 3 mit einem Einstreubereich 310 und zwei baugleichen im Stand der Technik bekannten Volierenanlagen 2 gezeigt. Darüber hinaus befindet sich in dem Tierstall 3 im Einstreubereich 310 eine Raufe 320, die den Durchgang für eine Person beschränkt bzw. verhindert. In Figur 13 ist ein weiterer Bereich des Tierstalls 3 gezeigt, wobei dieser Bereich insgesamt vier Tränken 251-254 umfasst sowie zwei Futterschalen 250. Ferner umfasst dieser Bereich des Tierstalls 3 eine Raufe 320, die zwischen zwei Tränken 252, 253 angeordnet ist. Einer Person wird der Durchgang durch den Tierstall auch hier erschwert, da zwischen einer Tränke und einer Raufe lediglich ein beschränkter Durchgang zum Betreten zur Verfügung steht.

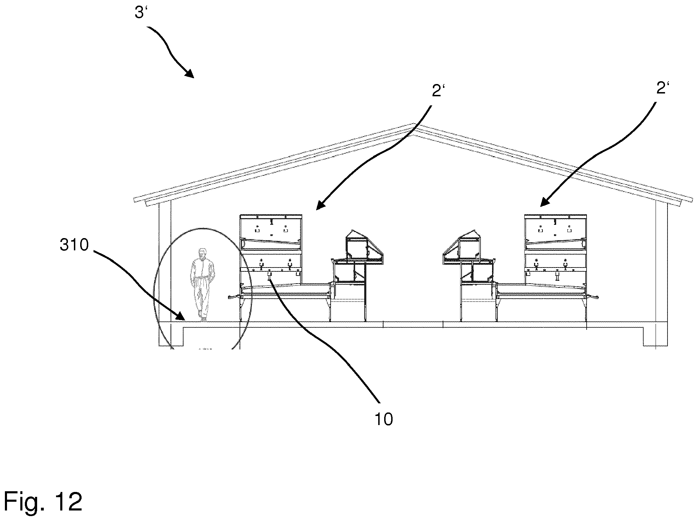

Der Tierstall 3' in Figur 12 umfasst zwei Volierenanlagen 2' mit jeweils einer Beschäftigungsvorrichtung 10 bzw. einem Beschäftigungssystem, in dem keine weiteren Beschäftigungsvorrichtungen beispielsweise in Form von Raufen im Einstreubereich notwendig sind. Somit wird eine Person nicht am Durchgang durch den Einstreubereich durch eine Beschäftigungsvorrichtung gehindert, sodass die tagtägliche Arbeit der in dem Stall arbeitenden Personen vereinfacht wird.

Durch eine erfindungsgemäße Beschäftigungsvorrichtung 10 sowie deren Anordnung in einer Volierenanlage 2' bzw. in einem Tierstall 3' ergibt sich insbesondere der Vorteil, dass die in diesem Tierstall gehaltenen Geflügeltiere weniger zum Federpicken und weniger zum Kannibalismus neigen. Darüber hinaus vereinfacht sich die Arbeit von im Tierstall arbeitenden Personen, da keine Beschäftigungsmöglichkeiten im Einstreubereich angeordnet werden müssen. Die Geflügeltiere werden durch die Beschäftigungsvorrichtung kontinuierlich beschäftigt und können darüber hinaus durch die Beschäftigungsvorrichtung mit weiterem Futter versorgt werden. Darüber hinaus resultiert die erfindungsgemäße Beschäftigungsvorrichtung einerseits darin, dass durch das verbesserte Stallklima und der somit reduzierte Stress der Geflügeltiere das Federpicken und/oder der Kannibalismus reduziert oder vermieden wird. Darüber hinaus sind durch die erfindungsgemäße Beschäftigungsvorrichtung die Schnäbel der Geflügeltiere abgerieben, sodass selbst wenn es zum Federpicken kommt, eine geringere Verletzungsgefahr besteht.

### BEZUGSZEICHEN

- 1, 1': Beschäftigungssystem
- 2, 2': Volierenanlage
- 3, 3': Tierstall
- 5: Pickmaterial
- 10: Beschäftigungsvorrichtung
- 20, 20': Fördersystem
- 110: Materialbehälter
- 111: erstes Ende Materialbehälter
- 112: zweites Ende Materialbehälter
- 113: Picköffnung
- 114: Picköffnung
- 116: Beabstandung
- 120: Pickschale
- 122: Abriebabschnitt
- 124: Pickschalenrand
- 131: erste Trennwand
- 132: zweite Trennwand
- 133: dritte Trennwand
- 134: vierte Trennwand
- 140: Verteilerelement
- 150, 150': Kupplungseinheit
- 205: Fördersystem
- 210: erstes Nest
- 220: zweites Nest
- 230: erster Aufenthaltsbereich
- 240: zweiter Aufenthaltsbereich
- 245: Durchgangsbereich
- 250: Futterschale
- 251: Tränke
- 252: Tränke
- 253: Tränke
- 254: Tränke
- 260: Bewegungsbahn
- 271: Geflügeltier
- 272: Geflügeltier
- 273: Exkremente
- 274: Exkremente
- 310: Einstreubereich
- 320: Raufe

## Patentansprüche

1. Beschäftigungsvorrichtung (10) für den Einsatz in einer Geflügeltierhaltung und/oder -aufzucht, umfassend
- einen Materialbehälter (110) mit
o mindestens einem Materialeinlass, und
o mindestens einer Picköffnung (113, 114),
- eine Pickschale (120) zur Aufnahme von Pickmaterial mit mindestens einem Abriebabschnitt (122), der eine abriebfördernde Oberfläche aufweist,
- wobei der Materialbehälter angeordnet und ausgebildet ist, ein Pickmaterial von dem Materialeinlass zu der Picköffnung zu führen, und
- wobei die Picköffnung derart angeordnet und ausgebildet ist, dass im Materialbehälter befindliches Pickmaterial an einem schwerkraftbedingten Austritt aus der Picköffnung gehindert ist.

2. Beschäftigungsvorrichtung (10) nach dem vorhergehenden Anspruch,
wobei der Materialbehälter (110) zwei oder mehr Picköffnungen (113, 114) umfasst.

3. Beschäftigungsvorrichtung (10) nach mindestens einem der vorhergehenden Ansprüche,
wobei die Picköffnung (113, 114) einen im Wesentlichen schlitzförmigen Querschnitt orthogonal zu einer Durchtrittsrichtung mit einer Haupterstreckungsrichtung und einer orthogonal zu dieser angeordneten Nebenerstreckungsrichtung aufweist, wobei
- die Nebenerstreckungsrichtung im Betriebszustand vorzugsweise im Wesentlichen horizontal ausgerichtet ist und deren Erstreckung ferner vorzugsweise in Richtung der Pickschale (120) zunimmt.

4. Beschäftigungsvorrichtung (10) nach mindestens einem der vorhergehenden Ansprüche, wobei sich die Picköffnung (113, 114) bis zu einem der Pickschale (120) zugewandten Ende des Materialbehälters (110) erstreckt.

5. Beschäftigungsvorrichtung (10) nach mindestens einem der vorhergehenden Ansprüche, wobei ein der Pickschale (120) zugewandtes Ende (111) des Materialbehälters (110) im Bereich der Picköffnung (113, 114) von der Pickschale beabstandet ist.

6. Beschäftigungsvorrichtung (10) nach mindestens einem der vorhergehenden Ansprüche, wobei
- die Nebenerstreckungsrichtung eine Abmessung von kleiner 8 mm, vorzugsweise kleiner 6 mm, insbesondere bevorzugt kleiner 4, ferner bevorzugt kleiner 2 mm, aufweist, und/oder
- die Haupterstreckungsrichtung im Betriebszustand vertikal ausgerichtet ist und vorzugsweise eine Abmessung von größer 2 mm, vorzugsweise größer 4 mm, insbesondere bevorzugt größer 6 mm, ferner bevorzugt größer 10 mm, darüber hinaus bevorzugt größer 20 mm, ferner bevorzugt größer 30 mm, und/oder
- die Picköffnung (113, 114) einen im Wesentlichen runden Querschnitt orthogonal zu einer Durchtrittsrichtung aufweist und der im Wesentlichen runde Querschnitt einen Durchmesser von kleiner 8 mm, vorzugsweise kleiner 6 mm, insbesondere bevorzugt kleiner 4, ferner bevorzugt kleiner 2 mm aufweist.

7. Beschäftigungsvorrichtung (10) nach mindestens einem der vorhergehenden Ansprüche,
wobei der Materialeinlass angeordnet und ausgebildet ist, mit einem Fördersystem (20, 20') gekuppelt zu werden, wobei die Kupplung vorzugsweise mittels einer Kupplungseinheit (150, 150') erfolgt, die ferner vorzugsweise an dem Materialbehälter (110) angeordnet ist.

8. Beschäftigungsvorrichtung (10) nach mindestens einem der vorhergehenden Ansprüche,
wobei der Abriebabschnitt (122) mindestens ein Trennelement (131-134) umfasst, das den Abriebabschnitt in zwei oder mehr Teilabriebabschnitte unterteilt.

9. Beschäftigungsvorrichtung (10) nach mindestens einem der vorhergehenden Ansprüche,
wobei die abriebfördernde Oberfläche des Abriebabschnitts (122) mindestens ein Abriebmaterial oder eine Kombination von zwei oder mehr Abriebmaterialien aufweist, welches bzw. welche vorzugsweise ausgewählt ist bzw. sind aus der Gruppe bestehend aus
- Metall, insbesondere Stahl,
- Keramik,
- Kunststoff,
- Korund,
- Bornitrid,
- Diamant, und
- Minerale.

10. Beschäftigungsvorrichtung (10) nach mindestens einem der vorhergehenden Ansprüche,
wobei eine Haupterstreckungsrichtung und/oder ein Durchmesser der Pickschale (120) eine Abmessung von kleiner 200 mm, vorzugsweise von kleiner 150 mm, insbesondere bevorzugt von kleiner 120 mm, ferner bevorzugt von kleiner 100 mm aufweist.

11. Beschäftigungsvorrichtung (10) nach mindestens einem der vorhergehenden Ansprüche,
wobei die Pickschale (120) eine tellerförmige Geometrie aufweist mit einem vorzugsweise kreisrunden und/oder ovalen und/oder eckigen Querschnitt.

12. Beschäftigungssystem (1, 1'), umfassend
- mindestens eine Beschäftigungsvorrichtung (10) nach mindestens einem der Ansprüche 1-11, und
- ein Fördersystem (20, 20') zur Förderung von Pickmaterial,
- wobei die Beschäftigungsvorrichtung mit dem Fördersystem über eine Kupplungseinheit (150, 150') derart gekoppelt ist, dass ein Pickmaterial von dem Fördersystem in den Materialbehälter (110) befördert wird, und
- wobei vorzugsweise im Betriebszustand die horizontalen Abmessungen der Beschäftigungsvorrichtung kleiner oder gleich der entsprechenden horizontalen Abmessungen des Fördersystems im Bereich der Beschäftigungsvorrichtung sind.

13. Beschäftigungssystem (1, 1') nach dem vorhergehenden Anspruch, umfassend
mindestens eine Futterschale (250) zur Bereitstellung eines Futters.

14. Tierstall (3'), insbesondere zur Aufzucht und/oder zum Halten von Geflügeltieren, insbesondere von Hühnervögeln,
umfassend
- mindestens eine Volierenanlage (2'), und
- einen Einstreubereich (310),
- wobei innerhalb der Volierenanlage mindestens eine Beschäftigungsvorrichtung (10) nach mindestens einem der Ansprüche 1-11 und/oder ein Beschäftigungssystem (1, 1') nach mindestens einem der Ansprüche 12-13 angeordnet ist bzw. sind.

15. Verfahren zur Aufzucht und/oder zum Halten von Geflügeltieren, insbesondere von Hühnervögeln, umfassend die Schritte
- Bereitstellen einer Beschäftigungsvorrichtung (10) nach mindestens einem der Ansprüche 1-11 und/oder eines Beschäftigungssystems (1, 1') nach mindestens einem der Ansprüche 12-13,
- Bereitstellen von Pickmaterial und Anordnen des Pickmaterials innerhalb eines Materialbehälters (110) der Beschäftigungsvorrichtung.
